# EUROPÄISCHE PATENTSCHRIFT

(11) **EP 2 650 166 B1**
(45) Veröffentlichungstag und Bekanntmachung des Hinweises auf die Patenterteilung: **13.09.2017**
(21) Anmeldenummer: 12305417.3
(22) Anmeldetag: 10.04.2012
(51) Int. Cl.: B60M 1/30, H02G 7/00, H01B 5/10, H01B 7/22, H01B 9/00

(54) **Kabel für Gleisanlagen**
Cable for rail assemblies
Câble pour voies ferrées

(43) Veröffentlichungstag der Anmeldung: 16.10.2013
(73) Patentinhaber: Nexans, 92400 Courbevoie (FR)
(72) Erfinder: Büthe, Harald, 41334 Nettetal (DE); Evers, Michael, 41751 Viersen (DE); Basiry, Smaeil, 41812 Erkelenz (DE)
(74) Vertreter: Döring, Roger

(56) Entgegenhaltungen:
- EP-A1- 2 096 645
- EP-A2- 2 202 758
- CN-U- 2 119 707
- CN-Y- 2 904 220
- DE-U1-202007 009 370

## Beschreibung

Die Erfindung bezieht sich auf ein Kabel für Gleisanlagen gemäß dem Oberbegriff des Patentanspruchs 1.

Ein solches Kabel ist beispielsweise in der EP 2 202 758 A2 beschrieben.

In der folgenden Beschreibung wird als Material für den Leiter des Kabels Kupfer angegeben. Damit sollen auch Kupferlegierungen erfaßt sein.

Derartige Kabel werden beispielsweise als Erdungskabel ohne besonderen Schutz in Gleisanlagen von Schienenfahrzeugen angeordnet. Sie sind dabei insbesondere an Masten angebracht, welche die zum Betrieb von elektrischen Schienenfahrzeugen benötigten, Strom führenden Drähte tragen. Die Kabel sind in allen Fällen gut sichtbar angeordnet, und zwar auch für Personen, die an sich nicht berechtigt sind, eine Gleisanlage zu betreten. Sie tun es aber trotzdem, weil sie die Kabel wegen ihres Kupfergehalts haben wollen. Dazu werden derartige Kabel in immer stärkerem Maße von Dieben abgeschnitten, ohne Rücksicht auf die Sicherheit des Fahrverkehrs. Nach Entfernung des Mantels liegt das Kupfer des Leiters frei. Es kann dann an den Dieben bekannte Abnehmer verkauft werden.

Die EP 2 096 645 A1 beschreibt einen zugfesten und vibrationsfesten elektrischen Leiter, der einen aus Kupfer bestehenden zentralen Kern aufweist. Um den Kern herum sind in einer ersten Lage Stahldrähte herumverseilt. Um die erste Lage ist eine zweite Lage aus Kupferdrähten mit einer vorgegebenen Schlaglänge herumverseilt.

Aus der DE 20 2007 009 370 U1 gehen diebstahlgeschützte Kabel und Leitungen hervor, in deren aus Kupferdrähten bestehenden Leitern zusätzlich galvanisierte Eisendrähte angeordnet sind, und zwar in den sich vor der äußeren Lage der Kupferdrähte ergebenden Zwickeln.

Die eingangs erwähnte EP 2 202 758 A2 beschreibt ein Erdungskabel für Gleisanlagen von Eisenbahneinrichtungen, dessen von einem Kunststoffmantel umgebener Leiter eine Mehrzahl von Einzeldrähten aufweist, von denen zumindest ein Teil als Kombinationseinzeldrähte ausgeführt ist. Die Kombinationseinzeldrähte haben einen von einem Kupfermantel umgebenen Drahtkern. Der Drahtkern kann aus Stahl bestehen.

Der Erfindung liegt die Aufgabe zugrunde, das eingangs geschilderte Kabel so zu gestalten, daß ein Diebstahl desselben erschwert und auch unattraktiv ist.

Diese Aufgabe wird entsprechend dem kennzeichnenden Merkmal des Patentanspruchs 1 gelöst.

Die in der den Kern des Leiters umgebenden Lage aus Einzeldrähten vorhandenen Stahldrähte stellen sicher, daß das Kabel zumindest mit herkömmlichen Schneidwerkzeugen nur wesentlich schwerer und zeitraubend durchtrennt werden kann. Aus diesem Grunde soll die Anzahl der Stahldrähte möglichst hoch sein, unter Berücksichtigung einer für den Leiter des Kabels insgesamt vorgegebenen maximal zulässigen Temperaturerhöhung von 260 K bei einem Kurzschlußstrom von 40 kA für eine Dauer von 100 ms. Es werden für dieses Kabel zum Durchtrennen desselben gegebenenfalls Spezialwerkzeuge benötigt, die nicht ohne weiteres bzw. zufällig zur Verfügung stehen. Der Diebstahl eines solchen Kabels wird also wesentlich erschwert. Hinzu kommt, daß das Kupfer des Kabels nicht allein durch Entfernen des Mantels desselben zugänglich ist, sondern es müssen auch noch mit entsprechendem Aufwand die Stahldrähte entfernt werden. Der Verkaufswert des Kabels wird wegen dieser in der Regel vom Abnehmer durchzuführenden Zusatzarbeit erheblich vermindert. Der Diebstahl desselben wird also weniger attraktiv.

Ausführungsbeispiele des Erfindungsgegenstandes sind in den Zeichnungen dargestellt.

Es zeigen:
- Fig. 1: schematisch einen Abschnitt einer Gleisanlage.
- Fig. 2: einen Querschnitt durch ein Kabel nach der Erfindung.
- Fig.: 3 einen Querschnitt durch gegenüber Fig. 2 ergänztes Kabel.

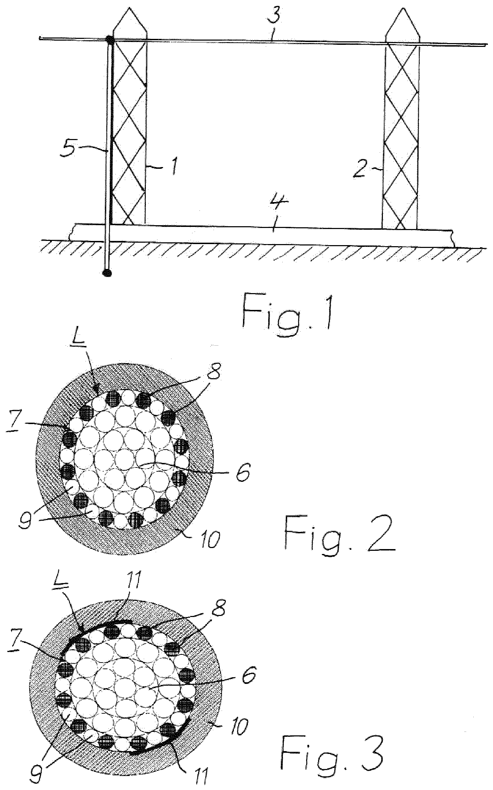

In Fig. 1 ist schematisch ein zwischen zwei Masten 1 und 2 liegender Abschnitt einer Gleisanlage dargestellt. Die Masten 1 und 2 tragen einen beim Betrieb eines Schienenfahrzeugs auf der Gleisanlage Strom führenden Leiter 3, von dem mittels eines an dem Schienenfahrzeug angebrachten Stromabnehmers Strom abgenommen werden kann, wenn dasselbe auf Schienen 4 der Gleisanlage bewegt wird. Am Mast 1 ist im dargestellten Ausführungsbeispiel ein elektrisches Kabel 5 als Erdungskabel angebracht, dessen Leiter einerseits mit dem Leiter 3 und andererseits mit Erdpotential verbunden ist.

Das Kabel 5 hat gemäß Fig. 2 einen Leiter L mit einem aus Kupfer bestehenden Kern 6. Der Kern 6 kann als massiver Strang aber auch als mehrdrähtiger Leiter ausgeführt sein, in dem eine Vielzahl von Kupferdrähten zusammengefaßt ist. Die Kupferdrähte sind in einem solchen Kern beispielsweise konzentrisch miteinander verseilt. Um den Kern 6 sind ebenfalls zum Leiter L gehörende Einzeldrähte aufgeseilt, welche denselben im dargestellten Ausführungsbeispiel in einer Lage 7 umgeben. Die Einzeldrähte sind einerseits als einfache Kreise eingezeichnete Kupferdrähte 8 und andererseits mit einer Kreuzschraffur versehene Stahldrähte 9. Über der Lage 7 aus Einzeldrähten ist ein Mantel 10 angeordnet. Er besteht beispielsweise aus Polyethylen. Zwischen der Lage 7 aus Einzeldrähten und dem Mantel 10 kann noch eine aus Isoliermaterial bestehende Bewicklung angebracht sein. Über der Lage 7 aus Einzeldrähten könnte auch mindestens eine weitere Lage aus Einzeldrähten mit gleichem Aufbau wie die Lage 7 angeordnet sein.

Die Anzahl der Stahldrähte 9 in der Lage 7 und damit auch die Anzahl der Kupferdrähte 8 derselben richtet sich im wesentlichen nach der maximalen zulässigen Erwärmung des Kabels im Kurzschlußfall. Sie ist vom Betreiber der Gleisanlage vorgeschrieben und beträgt maximal 260 K bei einem für eine Dauer vom 100 ms fließenden Kurzschlußstrom von 40 kA. Dieser Wert muß durch das im Leiter L des Kabels enthaltene Kupfer erreicht werden. Davon abhängig ist die Anzahl der Stahldrähte 9 variabel. Sie soll möglichst hoch sein, damit die mechanische Festigkeit gegenüber einem Schneidwerkzeug ebenfalls möglichst hoch ist.

Die Anzahl der Stahldrähte 9 soll nicht kleiner als die Anzahl der Kupferdrähte 8 sein. Wenn für beide Drahtarten die gleiche Anzahl eingesetzt wird, werden dieselben mit Vorteil alternierend in der Schicht 7 angeordnet, so wie es aus Fig. 2 hervorgeht.

Zur weiteren Erhöhung der mechanischen Festigkeit des Kabels kann entsprechend Fig. 3 über der Lage 7 aus Kupferdrähten 8 und Stahldrähten 9 zumindest ein Stahlband 11 aufgewickelt sein, vorzugsweise in Form einer offenen Wendel. Die Wickel- bzw. Verseilrichtung des Stahlbandes 11 ist vorzugsweise entgegengesetzt zur Verseilrichtung, mit der die Einzeldrähte der Lage 7 um den Kern 6 herumverseilt sind.

## Patentansprüche

1. Kabel für Gleisanlagen von elektrisch betriebenen Schienenfahrzeugen, welches einen Kupfer und Stahl aufweisenden elektrischen Leiter (L) und einen denselben umgebenden Mantel (10) aus Isoliermaterial aufweist, **dadurch gekennzeichnet, daß** um einen aus Kupfer bestehenden Kern (6) des Leiters (L) herum mindestens eine Lage (7) von Einzeldrähten aufgeseilt ist, in der sowohl Stahldrähte (9) als auch Kupferdrähte (8) angeordnet sind.

2. Kabel nach Anspruch 1, **dadurch gekennzeichnet, daß** Stahldrähte (9) und Kupferdrähte (8) alternierend in der den Kern (6) umgebenden Lage (7) angeordnet sind.

3. Kabel nach Anspruch 1, **dadurch gekennzeichnet, daß** die Anzahl der Stahldrähte (9) höher als die Anzahl der Kupferdrähte (8) ist.

4. Kabel nach Anspruch 1, **dadurch gekennzeichnet, daß** der Querschnitt des Kupfers des Leiters (L) einschließlich der Kupferdrähte (8) der den Kern (6) umgebenden Lage (7) nach Maßgabe einer für den Leiter insgesamt vorgegebenen maximal zulässigen Erwärmung im Kurzschlußfall bemessen ist.

5. Kabel nach einem der Ansprüche 1 bis 4, **dadurch gekennzeichnet, daß** um die den Kern (6) umgebende Lage (7) aus Einzeldrähten zusätzlich mindestens ein Stahlband (11) herumgewickelt ist.

6. Kabel nach Anspruch 5, **dadurch gekennzeichnet, daß** das Stahlband (11) mit zur Verseilrichtung der Einzeldrähte (8,9) der den Kern (6) umgebenden Lage (7) entgegengesetzter Verseilrichtung aufgebracht ist.

## Claims

1. A cable for railways of electrical track vehicles, which comprises a copper and steel containing electrical conductor (L) and a sheath (10) of insulating material surrounding the same, **characterized in that** at least one layer (7) of single wires is stranded around a copper core (6) of the conductor (L) which comprises steel wires (9) as well as copper wires (8).

2. Cable according to claim 1, **characterized in that** steel wires (9) and copper wires (8) are arranged alternatingly in the layers (7) which surrounds the core (6).

3. Cable according to claim 1, **characterized in that** the number of steel wires (9) is higher than the number of copperwires (8).

4. Cable according to claim 1, **characterized in that** the cross-section of the copper of the conductor (L) inclusive the copper wires (8) in the layer (7) which surrounds the core (6) is determined according to the maximum heating of the conductor in case of a short circuit.

5. Cable according to one of the claims 1 to 4, **characterized in that** in addition at least one steel ribbon (11) is wound around the layer (7) which surrounds the core (6).

6. Cable according to claim 5, **characterized in that** the steel ribbon (11) is wound with a direction of lay which is opposite to the direction of lay of the single wires (8,9) in the layer (7) which surrounds the core (6).

## Revendications

1. Câbles pour voies ferrées destinées à des véhicules ferroviaires entraînés électriquement, comportant un conducteur électrique (L) comprenant du cuivre et de l'acier et une gaine (10) constituée d'un matériau isolant et entourant ledit conducteur, **caractérisé en ce qu'**au moins une couche (7) de brins individuels est câblée autour d'une âme (6) du conducteur (L) constituée de cuivre, brins parmi lesquels il est prévu à la fois des brins d'acier (9) et des brins de cuivre (8).

2. Câble selon la revendication 1, **caractérisé en ce que** des brins d'acier (9) et des brins de cuivre (8) sont disposés de manière alternée dans la couche (7) entourant l'âme (6).

3. Câble selon la revendication 1, **caractérisé en ce que** le nombre des brins d'acier (9) est supérieur au nombre des brins de cuivre (8).

4. Câble selon la revendication 1, **caractérisé en ce que** la section transversale du cuivre du conducteur (L), y compris les brins d'acier (8) de la couche (7) entourant l'âme (6), est mesurée conformément à un échauffement maximal admissible prédéterminé total du conducteur en cas de court-circuit.

5. Câble selon l'une quelconque des revendications 1 à 4, **caractérisé en ce qu'**au moins une bande d'acier (11) est enroulée autour de la couche (7) constituée de brins individuels et entourant l'âme (6).

6. Câble selon la revendication 5, **caractérisé en ce que** la bande d'acier (11) est déposée suivant un sens de câblage opposé au sens de câblage des brins individuels (8, 9) de la couche (7) entourant l'âme (6).
